# EUROPEAN PATENT APPLICATION

(11) **EP 4 270 180 A1**
(43) Date of publication of application: **01.11.2023**
(21) Application number: 21926782.0
(22) Date of filing: 15.12.2021
(51) Int. Cl.: G06F 8/65

(54) **UPDATE DEVICE, INDOOR AND OUTDOOR UNITS, UPDATE SYSTEM, UPDATE METHOD AND PROGRAMME**

(30) Priority: 22.02.2021 JP 2021025889
(71) Applicant: MITSUBISHI HEAVY INDUSTRIES THERMAL SYSTEMS, LTD., Tokyo, 100-8332 (JP)
(72) Inventor: YOKOHAMA Koji, Tokyo 100-8332 (JP); TAKAHASHI Kazuyoshi, Tokyo 100-8332 (JP)
(74) Representative: Cabinet Beau de Loménie
(86) International application number: PCT/JP2021/046175
(87) International publication number: WO 2022/176357

(57) **Abstract**

This update device is connected to a communication line connecting a plurality of indoor and outdoor units, and comprises: an error notification invalidation instruction unit which instructs a plurality of indoor and outdoor units not to execute an error notification even if a response has not been received from the indoor and outdoor units that are to be updated; an update processing unit which carries out a programme update processing on the indoor or outdoor units that are to be updated; and an error notification validation instruction unit which instructs an error notification to be executed if a response has not been received from the indoor and outdoor units that are to be updated.

## Description

### Technical Field

The present disclosure relates to an update device, an indoor and outdoor unit, an update system, an update method, and a programme.

This application claims the priority of Japanese Patent Application No. 2021-025889 filed in Japan on February 22, 2021, the content of which is incorporated herein by reference.

### Background Art

In an air conditioner, a programme may be updated in order to add or change a function. A technique capable of easily updating the programme by using a communication line connecting an outdoor unit and an indoor unit (hereinafter, the outdoor unit and the indoor unit are collectively referred to as "indoor and outdoor units") constituting the air conditioner has been known (see, for example, PTL 1).

Further, in PTL 2, a technique for avoiding erroneous detection of a communication abnormality that an indoor unit and an outdoor unit cannot communicate in a case where power supply to the outdoor unit is cut off in an air conditioning device capable of cutting off power supply to the outdoor unit of which an operation is being stopped has been disclosed.

### Citation List

### Patent Literature

[PTL 1] Japanese Patent No. 3819583
[PTL 2] Japanese Unexamined Patent Application Publication No. 2013-139893

### Summary of Invention

### Technical Problem

Normally, indoor and outdoor units belonging to the identical refrigerant system exchange control signals with each other including an indoor and outdoor unit of which an operation is being stopped. Some of the control signals request a reply from a transmission partner. For example, in a case where the indoor unit being operated receives a predetermined request signal (control signal) from an outdoor unit or a centralized controller, a response signal (control signal) indicating an operation state of the host unit is returned. Further, even in a case where the operation of the indoor unit is being stopped, in a case where the predetermined request signal is received from the outdoor unit or the centralized controller, a response signal indicating that the host unit is "being stopped" is returned.

In a case where the outdoor unit or the like that has transmitted the request signal as described above does not receive a reply from the transmission partner within a predetermined time, it is determined that some abnormality may have occurred in a transmission partner or a communication system, and an error notification (error issuance) is given to an operator or the like.

The indoor and outdoor unit of which the programme is being updated is normally in an operation stopped state. However, since the programme is being updated, it is not possible to return a response signal indicating that the outdoor unit is "being stopped" to the request signal from the outdoor unit or the like. Thus, an error notification may be given even though abnormality has not occurred in the communication system.

An object of the present disclosure is to provide an update device, an indoor and outdoor unit, an update system, an update method, and a programme that do not mistakenly perform an error notification during programme update.

### Solution to Problem

An update device of the present disclosure is a device that is connected to a communication line connecting a plurality of indoor and outdoor units. The device includes an error notification invalidation instruction unit that instructs the plurality of indoor and outdoor units not to perform an error notification even in a case where a reply is not received from an indoor and outdoor unit to be updated, an update processing unit that performs update processing of a programme on the indoor and outdoor unit to be updated, and an error notification validation instruction unit that instructs the plurality of indoor and outdoor units to perform the error notification in a case where the reply is not received from the indoor and outdoor unit to be updated.

Further, an indoor and outdoor unit of the present disclosure includes a control signal transmission and reception unit that transmits and receives a control signal to and from another indoor and outdoor unit or a centralized controller via a communication line, an error notification unit that performs an error notification in a case where a reply is not received from a predetermined indoor and outdoor unit within a predetermined time after the control signal with the predetermined indoor and outdoor unit as a destination is transmitted, and an error notification setting unit that sets error notification invalidation for an indoor and outdoor unit to be updated in a case where a predetermined error notification invalidation instruction to which an address of the indoor and outdoor unit to be updated is assigned is received from an update device, and sets error notification validation for the indoor and outdoor unit to be updated in a case where a predetermined error notification validation instruction is received from the update device. In a case where a reply is not received from the indoor and outdoor unit for which the error notification invalidation is set within the predetermined time after the control signal is transmitted, the error notification unit does not perform the error notification.

Further, an indoor and outdoor unit of the present disclosure includes a control signal transmission and reception unit that transmits and receives a control signal to and from another indoor and outdoor unit or a centralized controller via a communication line, an error notification unit that performs an error notification in a case where a reply is not received from a predetermined indoor and outdoor unit within a predetermined time after the control signal with the predetermined indoor and outdoor unit as a destination is transmitted, and an error notification setting unit that sets error notification invalidation for an indoor and outdoor unit to be updated in a case where a predetermined error notification invalidation instruction to which an address of the indoor and outdoor unit to be updated is assigned is received from an update device, and sets error notification validation for the indoor and outdoor unit to be updated in a case where a predetermined error notification validation instruction is received from the update device. The control signal transmission and reception unit does not transmit and receive the control signal to and from the indoor and outdoor unit for which the error notification invalidation is set.

Further, an update system of the present disclosure includes the above-mentioned update device and the above-mentioned indoor and outdoor unit.

Further, an update method of the present disclosure is a method using an update device connected to a communication line connecting a plurality of indoor and outdoor units. The method includes a step of instructing the plurality of indoor and outdoor units not to perform an error notification even in a case where a reply is not received from an indoor and outdoor unit to be updated, a step of performing update processing of a programme on the indoor and outdoor unit to be updated, and a step of instructing the plurality of indoor and outdoor units to perform the error notification in a case where the reply is not received from the indoor and outdoor unit to be updated.

Further, a programme of the present disclosure causes an update device connected to a communication line connecting a plurality of indoor and outdoor units to execute a step of instructing the plurality of indoor and outdoor units not to perform an error notification even in a case where a reply is not received from an indoor and outdoor unit to be updated, a step of performing update processing of a programme on the indoor and outdoor unit to be updated, and a step of instructing the plurality of indoor and outdoor units to perform the error notification in a case where the reply is not received from the indoor and outdoor unit to be updated.

### Advantageous Effects of Invention

In accordance with the above-described update device, indoor and outdoor unit, update system, update method, and programme, it is possible to prevent an error notification from being mistakenly performed during programme update.

### Brief Description of Drawings

Fig. 1 is a diagram illustrating an overall configuration of an update system according to a first embodiment.
Fig. 2 is a first diagram illustrating a functional configuration of an update device according to the first embodiment.
Fig. 3 is a second diagram illustrating the functional configuration of the update device according to the first embodiment.
Fig. 4 is a diagram illustrating a functional configuration of an indoor and outdoor unit according to the first embodiment.
Fig. 5 is a diagram illustrating a processing flow of the update device and the indoor and outdoor unit according to the first embodiment.
Fig. 6 is a diagram illustrating a processing flow of the indoor and outdoor unit and a centralized controller according to the first embodiment.
Fig. 7 is a diagram illustrating a processing flow of an indoor and outdoor unit and a centralized controller according to a second embodiment.

### Description of Embodiments

### [First Embodiment]

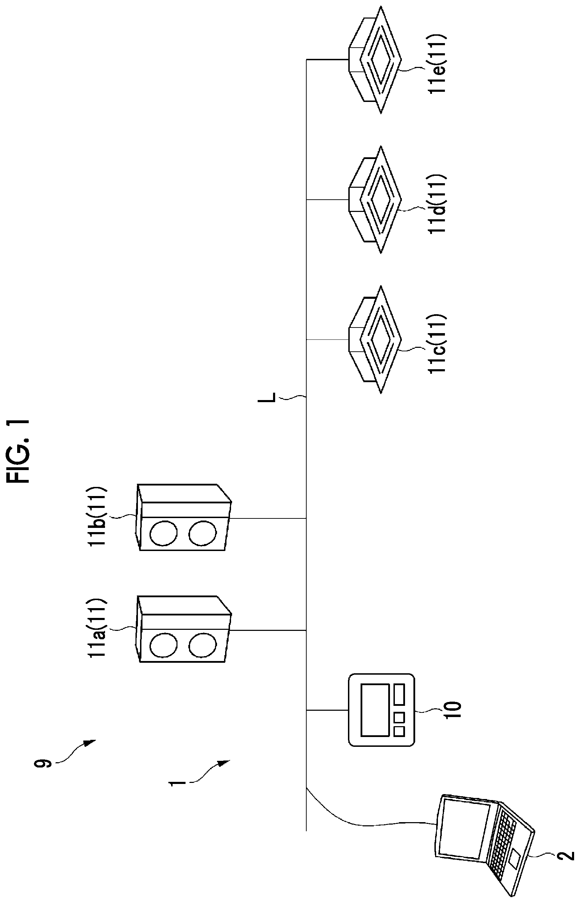

Hereinafter, an update system according to a first embodiment will be described in detail with reference to Figs. 1 to 6.

### (Overall Configuration)

Fig. 1 is a diagram illustrating an overall configuration of the update system according to the first embodiment.

As illustrated in Fig. 1, an update system 9 is a system for updating control programmes of outdoor units 11a and 11b and indoor units 11c, 11d, and 11e constituting an air conditioning system 1.

The update system 9 includes the air conditioning system 1 including a centralized controller 10 and a plurality of indoor and outdoor units 11 (outdoor units 11a and 11b and indoor units 11c, 11d, and 11e), and an update device 2.

The air conditioning system 1 will be described.

The air conditioning system 1 is, for example, a commercial package air conditioner installed in a building or the like. The air conditioning system 1 includes the centralized controller 10, the plurality of outdoor units 11a and 11b, and indoor units 11c, 11d, and 11e. Hereinafter, the plurality of outdoor units 11a and 11b and indoor units 11c, 11d, and 11e will be collectively referred to as the indoor and outdoor units 11.

The centralized controller 10 is a control panel that comprehensively controls operations of the plurality of indoor and outdoor units 11.

The indoor and outdoor units 11 are connected to refrigerant systems through a common refrigerant pipe (not illustrated), and indoor air conditioning is implemented by heat exchange by a refrigerant circulating in the refrigerant pipe. The indoor and outdoor units 11 operate in accordance with an operation command (a cooling and heating operation, a set temperature, or the like) given by the centralized controller 10.

As illustrated in Fig. 1, component devices (centralized controller 10 and indoor and outdoor unit 11) of the air conditioning system 1 are connected to each other via one communication line L to be capable of communicating with each other.

Normally, the centralized controller 10 and the indoor and outdoor units 11 exchange control signals with each other at regular intervals (for example, at intervals of one second) via the communication line L. Specifically, the control signal is the operation command (the cooling and heating operation, the set temperature, or the like) for each indoor and outdoor unit 11 or a signal (an abnormality detection signal or the like) indicating an individual state of the indoor and outdoor unit 11. For example, in a case where there is a change in a set temperature or the like, the air conditioning system 1 can immediately reflect such a change in the operation by constantly transmitting and receiving such a control signal between the component devices, and in a case where an abnormality has occurred, a protective operation (emergency stop or the like) can be immediately executed.

Some of the control signals described above request a reply from the transmission partner. For example, assuming that the indoor unit 11c is being operated, in a case where the indoor unit 11c being operated receives a predetermined request signal (control signal) from the outdoor units 11a and 11b or the centralized controller 10, a response signal (control signal) indicating an operation state of the host unit is returned. Further, for example, in a case where the operation of the indoor unit 11e is being stopped, in a case where a predetermined request signal is received from the outdoor units 11a and 11b or the centralized controller 10, the indoor unit 11e returns a response signal indicating that the host unit is "being stopped".

Next, the update device 2 will be described.

The update device 2 is a terminal device used in a case where the control programmes of the indoor and outdoor units 11 constituting the air conditioning system 1 are updated. The update device 2 may be, for example, a portable notebook PC or tablet terminal. A worker (serviceman) in charge of the air conditioning system 1 connects the update device 2 to the communication line L in a case where the control programme of each indoor and outdoor unit 11 is updated. The worker designates one indoor and outdoor unit 11 of which the control programme is to be updated through the update device 2, and executes update processing for a new control programme.

Note that, the control programme of the indoor and outdoor unit 11 cannot be updated during the operation. Accordingly, the worker designates the indoor and outdoor unit 11 that is not being operated (stopped) and sets the designated indoor and outdoor unit as a target of which the control programme is to be updated. In the example of Fig. 1, for example, in a case where the indoor unit 11c is being stopped and another indoor and outdoor unit 11 is being operated, the worker designates the indoor unit 11c as the target of which the control programme is to be updated. In this case, even during the update processing of the control programme for the indoor unit 11c, the control signal is exchanged via the communication line L between the indoor and outdoor units 11 other than the indoor unit 11c or between the indoor and outdoor unit 11 other than the indoor unit 11c and the centralized controller 10.

### (Functional Configuration of Update Device)

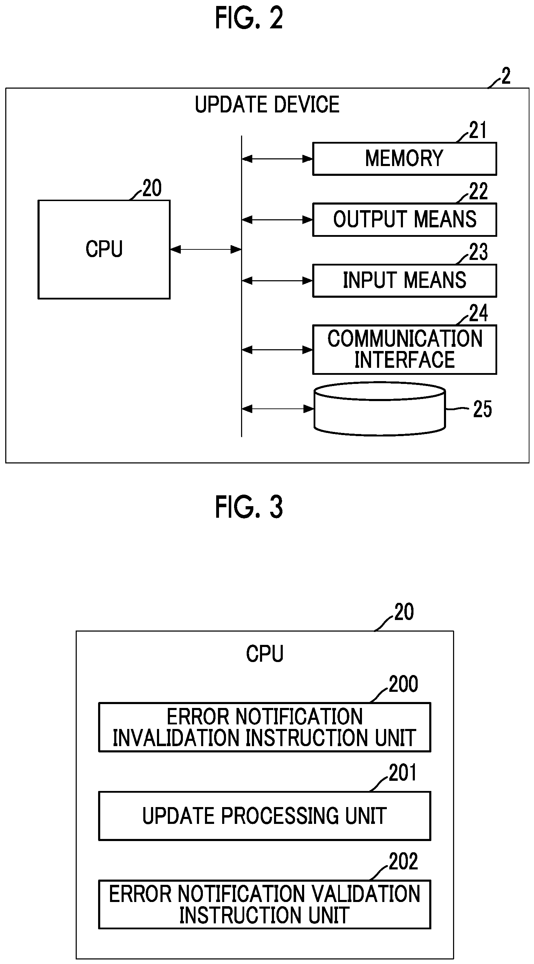

Figs. 2 and 3 are diagrams illustrating functional configurations of the update device according to the first embodiment.

As illustrated in Fig. 2, the update device 2 has a configuration as a general terminal device. That is, the update device 2 includes a CPU 20, a memory 21, output means 22 such as a display, input means 23 such as a mouse, a keyboard, and a touch pad, a communication interface 24, and a recording medium 25.

In the present embodiment, the communication interface 24 of the update device 2 can be connected to an external connection terminal of the communication line L (Fig. 1). Further, an update control programme or the like is retracted in the recording medium 25.

Next, a function of the CPU 20 will be described with reference to Fig. 3.

The CPU 20 exerts functions as an error notification invalidation instruction unit 200, an update processing unit 201, and an error notification validation instruction unit 202 by operating according to a predetermined programme prepared in advance.

Even in a case where a reply is not received from the indoor and outdoor unit 11 of which the control programme is to be updated, the error notification invalidation instruction unit 200 transmits, to the plurality of indoor and outdoor units 11, a signal (hereinafter, also referred to as an "error notification invalidation instruction".) for giving an instruction not to perform an error notification. Specifically, the error notification invalidation instruction unit 200 designates an address of the indoor and outdoor unit 11 of which the control programme is to be updated, and transmits the error notification invalidation instruction to all the indoor and outdoor units 11 and the centralized controller 10 connected to the communication line L.

The update processing unit 201 performs the update processing of the control programme on the target indoor and outdoor unit 11.

In a case where the reply is not received from the indoor and outdoor unit 11 to be updated, the error notification validation instruction unit 202 transmits, to the plurality of indoor and outdoor units 11, a signal (hereinafter, also referred to as an "error notification validation instruction".) for giving an instruction to perform the error notification. Specifically, the error notification validation instruction unit 202 designates an address of the indoor and outdoor unit 11 of which the control programme is to be updated, and transmits an error notification validation instruction to all the indoor and outdoor units 11 and the centralized controller 10 connected to the communication line L. Consequently, all the indoor and outdoor units 11 and the centralized controller 10 return to a state before the error notification invalidation signal is received (that is, a state where an error is notified in a case where there is no reply from a target that transmits a request signal).

### (Functional Configuration of Indoor and Outdoor Unit)

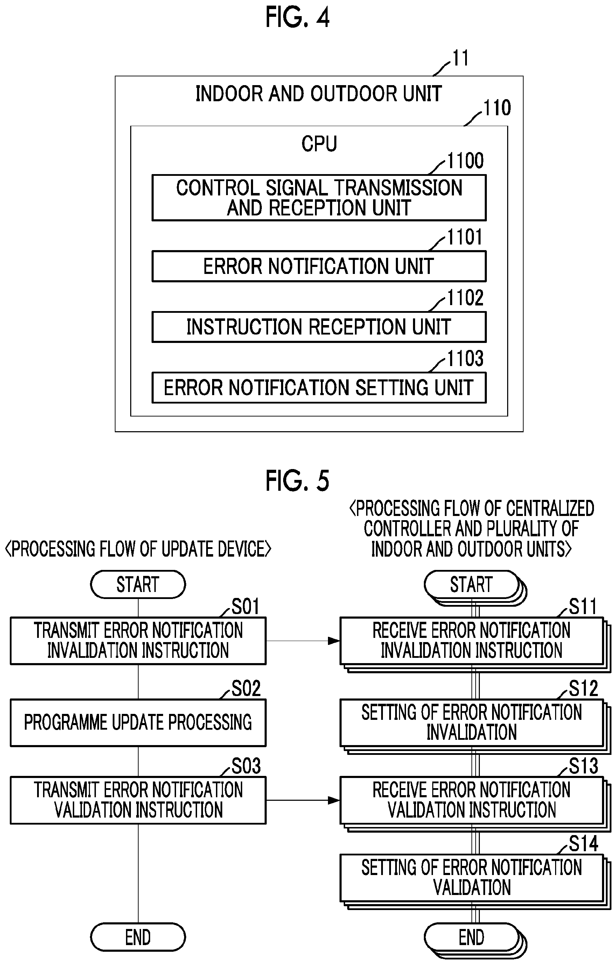

Fig. 4 is a diagram illustrating a functional configuration of the indoor and outdoor unit according to the first embodiment.

Next, a function of the indoor and outdoor unit 11 will be described with reference to Fig. 4.

As illustrated in Fig. 4, a CPU 110 of the indoor and outdoor unit 11 exerts functions as a control signal transmission and reception unit 1100, an error notification unit 1101, an instruction reception unit 1102, and an error notification setting unit 1103.

During the operation, the control signal transmission and reception unit 1100 periodically transmits and receives a control signal to and from another indoor and outdoor unit 11 or the centralized controller 10 via the communication line L.

In a case where a reply from the predetermined indoor and outdoor unit 11 is not received within a predetermined time after the control signal with the predetermined indoor and outdoor unit 11 as a destination is transmitted, the error notification unit 1101 gives an error notification (error issuance) to an operator.

The instruction reception unit 1102 receives an error notification invalidation instruction and an error notification validation instruction from the update device 2.

In a case where an error notification invalidation instruction to which the address of the indoor and outdoor unit to be updated is assigned is received from the update device 2, the error notification setting unit 1103 sets the error notification invalidation for the indoor and outdoor unit 11 to be updated. Further, in a case where the error notification validation instruction is received from the update device 2, the error notification setting unit 1103 sets the error notification validation for the indoor and outdoor unit 11 to be updated.

The centralized controller 10 includes a functional configuration similar to the functional configuration of the indoor and outdoor unit 11 illustrated in Fig. 4 (the control signal transmission and reception unit 1100, the error notification unit 1101, the instruction reception unit 1102, and the error notification setting unit 1103). The functional configuration of the centralized controller 10 will not be illustrated.

### (Processing Flow of Update Device and Indoor and Outdoor Unit)

Fig. 5 is a diagram illustrating a processing flow of the update device 2 and the indoor and outdoor unit 11 according to the first embodiment.

Hereinafter, the processing flow of the update device 2 and the indoor and outdoor unit 11 will be described in detail with reference to Fig. 5.

The processing flow illustrated in Fig. 5 is executed in a case where the update device 2 starts the update processing of the control programme for the target indoor and outdoor unit 11 (indoor unit 11e of which the operation is being stopped).

First, the error notification invalidation instruction unit 200 of the update device 2 transmits the error notification invalidation instruction to the centralized controller 10 and all the indoor and outdoor units 11 via the communication line L (step S01). At this time, the error notification invalidation instruction unit 200 assigns the address of the indoor and outdoor unit 11 (for example, the indoor unit 11e) of which the control programme is to be updated, and transmits the error notification invalidation instruction.

The centralized controller 10 and each indoor and outdoor unit 11 (instruction reception unit 1102) receive the error notification invalidation instruction from the update device 2 (step S11). The centralized controller 10 and each indoor and outdoor unit 11 (error notification setting unit 1103) set the error notification invalidation by receiving the error notification invalidation instruction (step S12). Specifically, the setting of the error notification invalidation is processing of setting flag information (1 = validation/0 = invalidation) indicating whether or not to validate or invalidate the error notification to 0 (invalid) in an internal memory.

Consequently, the centralized controller 10 and each indoor and outdoor unit 11 are set not to perform the error notification even in a case where the response signal is not received from the indoor and outdoor unit 11 (indoor unit 11e) designated by the address.

Subsequently, the update processing unit 201 of the update device 2 executes programme update processing for the indoor unit 11c via the communication line L (step S02). Consequently, the control programme of the indoor unit 11c is updated.

In a case where the programme update processing for the indoor unit 11c is completed, the error notification validation instruction unit 202 of the update device 2 subsequently transmits the error notification validation instruction to the centralized controller 10 and all the indoor and outdoor units 11 via the communication line L (step S03).

At this time, the centralized controller 10 and each indoor and outdoor unit 11 (instruction reception unit 1102) receive the error notification validation instruction (step S13). The centralized controller 10 and each indoor and outdoor unit 11 set the error notification validation by receiving the error notification validation instruction (step S14). Specifically, the setting of the error notification validation is processing of setting the flag information indicating whether or not to validate or invalidate the error notification to 1 (valid) in the internal memory. Consequently, the centralized controller 10 and each indoor and outdoor unit 11 return the setting related to the error notification to an original state (a state before the error notification is invalidated).

### (Processing of Indoor and Outdoor Unit and Centralized Controller)

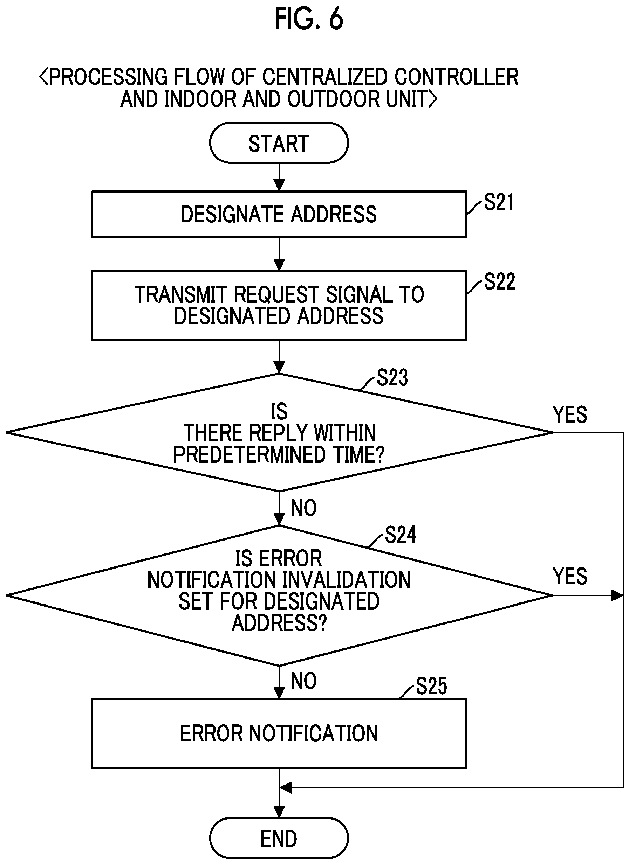

Fig. 6 is a diagram illustrating a processing flow of the indoor and outdoor unit 11 and the centralized controller 10 according to the first embodiment.

The processing flow illustrated in Fig. 6 is executed in a case where a control signal is periodically exchanged with another indoor and outdoor unit 11 during the operation of the indoor and outdoor unit 11 and the centralized controller 10 which are not the targets of which the control programme is to be updated.

First, the control signal transmission and reception unit 1100 of the centralized controller 10 or each indoor and outdoor unit 11 designates the address of the indoor and outdoor unit 11 to be a communication target (a transmission destination of the request signal) (step S21). Subsequently, the control signal transmission and reception unit 1100 assigns the address (the address of the indoor and outdoor unit 11 to be the communication target) designated in step S21 and transmits the request signal to the communication line L (step S22).

Subsequently, the control signal transmission and reception unit 1100 waits for the response signal from the indoor and outdoor unit 11 of the transmission destination. Here, the control signal transmission and reception unit 1100 determines whether or not the reply signal is received within a predetermined time after transmission (step S23).

In a case where the reply signal is received from the indoor and outdoor unit 11 of the transmission destination before a predetermined time elapses (step S23; YES), since communication with the communication target can be correctly performed, the centralized controller 10 or the indoor and outdoor unit 11 ends processing without performing the error notification.

In a case where the reply signal is not received the predetermined time has elapsed (step S23; NO), the error notification unit 1101 of the centralized controller 10 or each indoor and outdoor unit 11 determines whether or not the address designated in step S21 is an address for which the error notification invalidation is set (step S24). The determination as to whether or not the error notification invalidation is set is performed by referring to the above-mentioned flag information (1 = validation/0 = invalidation).

In a case where the address designated in step S21 is the address for which the error notification invalidation is set (step S24; YES), it can be determined that the indoor and outdoor unit 11 is in a state where the response signal cannot be returned since the control programme is being updated. Accordingly, the centralized controller 10 or the indoor and outdoor unit 11 ends the processing without performing the error notification.

In a case where the address designated in step S21 is not the address for which the error notification invalidation is set (step S24; NO), it can be determined that the indoor and outdoor unit 11 is in a state where the response signal cannot be returned even though the control programme is not being updated. Accordingly, the error notification unit 1101 notifies the operator of the error (step S25).

### (Effects)

In accordance with the update system 9 described above, the update device 2 can change the setting of the validation or invalidation of the error notification for the centralized controller 10 or each indoor and outdoor unit 11 in a case where the response signal is not received from a specific indoor and outdoor unit 11 (indoor and outdoor unit 11 of which the control programme is to be updated). Further, in a case where the error notification invalidation is set, the centralized controller 10 and each indoor and outdoor unit 11 do not perform the error notification even in a case where the response signal is not received from a communication partner. Consequently, in a case where the centralized controller 10 and each indoor and outdoor unit 11 do not receive the response signal from the indoor and outdoor unit 11 of which the control programme is being updated, it is possible to prevent the centralized controller and each indoor and outdoor unit from mistakenly notifying the error.

As described above, in accordance with the update system 9 according to the first embodiment, it is possible to prevent the error notification from being mistakenly performed even during the programme update.

### [Second Embodiment]

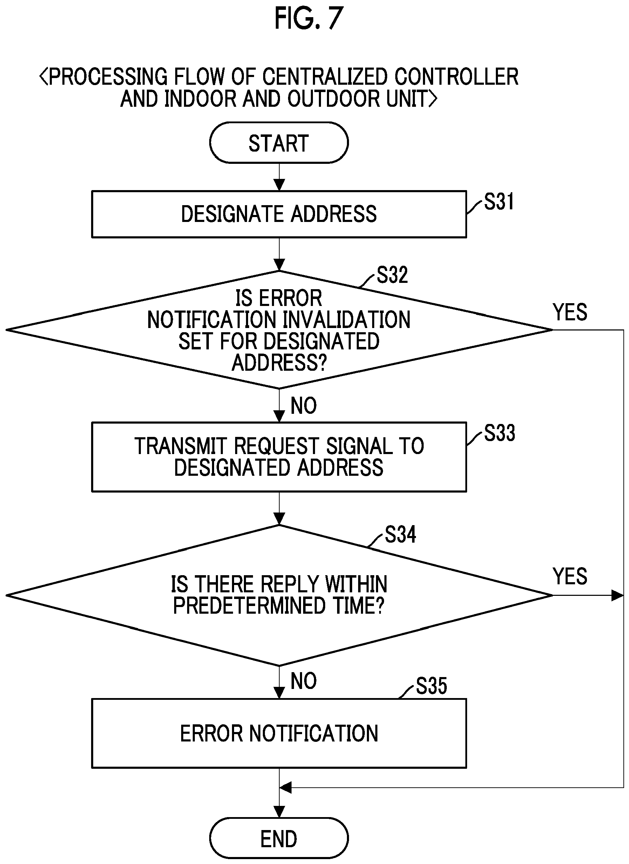

Hereinafter, an update system according to a second embodiment will be described in detail with reference to Fig. 7.

Note that, since an overall configuration and a functional configuration of the update system according to the second embodiment are similar to the configurations of the first embodiment, detailed description thereof will be omitted.

### (Processing of Indoor and Outdoor Unit and Centralized Controller)

Fig. 7 is a diagram illustrating a processing flow of the indoor and outdoor unit and the centralized controller.

The update system 9 according to the second embodiment executes the processing flow illustrated in Fig. 7 instead of the processing flow of Fig. 6 described in the first embodiment. Specifically, the processing flow is as follows.

First, the control signal transmission and reception unit 1100 of the centralized controller 10 or each indoor and outdoor unit 11 designates the address of the indoor and outdoor unit 11 to be the communication target (the transmission destination of the request signal) (step S31). Subsequently, the control signal transmission and reception unit 1100 determines whether or not the address designated in step S31 is the address for which the error notification invalidation is set (step S32). The determination as to whether or not the error notification invalidation is set is performed by referring to the above-mentioned flag information (1 = validation/0 = invalidation).

In a case where the address designated in step S31 is the address for which the error notification invalidation is set (step S32; YES), the control signal transmission and reception unit 1100 ends the processing without transmitting the control signal. That is, the centralized controller 10 and the indoor and outdoor unit 11 do not transmit the request signal itself to the address for which the error notification invalidation is set.

In a case where the address designated in step S31 is not the address for which the error notification invalidation is set (step S32; NO), the control signal transmission and reception unit 1100 assigns the address designated in step S31 (the address of the indoor and outdoor unit 11 to be the communication target), and transmits the request signal to the communication line L (step S33).

Subsequently, the control signal transmission and reception unit 1100 waits for the response signal from the indoor and outdoor unit 11 of the transmission destination. Here, the control signal transmission and reception unit 1100 determines whether or not the reply signal is received within a predetermined time (step S34).

In a case where the reply signal is received from the indoor and outdoor unit 11 of the transmission destination before the predetermined time elapses (step S34; YES), since communication with the communication target can be correctly performed, the centralized controller 10 or the indoor and outdoor unit 11 ends the processing without performing the error notification.

In a case where the reply signal is not received even after the predetermined time has elapsed (step S34; NO), it can be determined that the indoor and outdoor unit 11 is in a state where the response signal cannot be returned even though the control programme is not being updated (the control signal is not transmitted to the indoor and outdoor unit 11 of which the control programme is being updated). Accordingly, the error notification unit 1101 notifies the operator of the error (step S35).

### (Effects)

In accordance with the update system 9 described above, since the control signal is not transmitted to the indoor and outdoor unit 11 of which the control programme is being updated, it is possible to prevent the error notification from being mistakenly performed by simpler processing, and it is possible to reduce a communication line usage rate by not transmitting an unnecessary control signal for which a response cannot be obtained.

In the above-described embodiments, procedures of various kinds of processing of the update device 2 and the indoor and outdoor units 11 are stored in a computer-readable recording medium in the form of a programme, and the various kinds of processing are performed by causing a computer to read and execute the programme. Further, examples of the computer-readable recording medium include a magnetic disk, a magneto-optical disk, a CD-ROM, a DVD-ROM, a semiconductor memory, and the like. Further, this computer programme may be transferred to a computer through a communication line, and the computer receiving the transfer may execute the programme.

The programme may be for implementing a part of the above-mentioned functions. Further, the programme may be a file, a so-called difference file (difference programme), that can implement the above-mentioned functions in combination with a programme already recorded in a computer system.

As described above, although some embodiments according to the present disclosure have been described, all of these embodiments are presented as examples and are not intended to limit the scope of the invention. These embodiments can be implemented in various other forms, and various omissions, replacements, and changes can be made without departing from the gist of the invention. These embodiments and variations thereof are included in the scope of the invention described in the claims and the equivalent scope thereof, as well as in the scope and gist of the invention.

### [Appendix]

The update device 2, the indoor and outdoor unit 11, the update system 9, the update method, and the programme described in each embodiment are understood as follows, for example.
(1) An update device 2 according to a first aspect is a device that is connected to a communication line L connecting a plurality of indoor and outdoor units 11. The device includes an error notification invalidation instruction unit 200 that instructs the plurality of indoor and outdoor units 11 not to perform an error notification even in a case where a reply is not received from an indoor and outdoor unit 11 to be updated, an update processing unit 201 that performs update processing of a programme on the indoor and outdoor unit 11 to be updated, and an error notification validation instruction unit 202 that instructs the plurality of indoor and outdoor units 11 to perform the error notification in a case where the reply is not received from the indoor and outdoor unit 11 to be updated.
(2) In accordance with the update device 2 according to a second aspect, the error notification invalidation instruction unit 200 may further instruct a centralized controller 10 connected to the communication line L not to perform the error notification even in a case where the reply is not received from the indoor and outdoor unit 11 to be updated.
(3) In accordance with the update device 2 according to a third aspect, the error notification validation instruction unit 202 may further instruct a centralized controller 10 connected to the communication line L to perform the error notification in a case where the reply is not received from the indoor and outdoor unit 11 to be updated.
(4) An indoor and outdoor unit 11 according to a fourth aspect includes a control signal transmission and reception unit 1100 that transmits and receives a control signal to and from another indoor and outdoor unit 11 or a centralized controller 10 via a communication line L, an error notification unit 1101 that performs an error notification in a case where a reply is not received from a predetermined indoor and outdoor unit 11 within a predetermined time after the control signal with the predetermined indoor and outdoor unit as a destination is transmitted, and an error notification setting unit 1103 that sets error notification invalidation for an indoor and outdoor unit 11 to be updated in a case where a predetermined error notification invalidation instruction to which an address of the indoor and outdoor unit 11 to be updated is assigned is received from an update device 2, and sets error notification validation for the indoor and outdoor unit 11 to be updated in a case where a predetermined error notification validation instruction is received from the update device 2.

In a case where a reply is not received from the indoor and outdoor unit 11 for which the error notification invalidation is set within the predetermined time after the control signal is transmitted, the error notification unit 1101 does not perform the error notification.

(5) An indoor and outdoor unit 11 according to a fifth aspect includes a control signal transmission and reception unit 1100 that transmits and receives a control signal to and from another indoor and outdoor unit 11 or a centralized controller 10 via a communication line L, an error notification unit 1101 that performs an error notification in a case where a reply is not received from a predetermined indoor and outdoor unit 11 within a predetermined time after the control signal with the predetermined indoor and outdoor unit 11 as a destination is transmitted, and an error notification setting unit 1103 that sets error notification invalidation for an indoor and outdoor unit 11 to be updated in a case where a predetermined error notification invalidation instruction to which an address of the indoor and outdoor unit 11 to be updated is assigned is received from an update device 2, and sets error notification validation for the indoor and outdoor unit 11 to be updated in a case where a predetermined error notification validation instruction is received from the update device 2.

The control signal transmission and reception unit 1100 does not transmit and receive the control signal to and from the indoor and outdoor unit 11 for which the error notification invalidation is set.

(6) An update system 9 according to a sixth aspect includes the update device 2 according to any one of (1) to (3), and the indoor and outdoor unit 11 according to (4) or (5).

(7) An update method according to a seventh aspect is a method using an update device 2 connected to a communication line L connecting a plurality of indoor and outdoor units 11. The method includes a step of instructing the plurality of indoor and outdoor units 11 not to perform an error notification even in a case where a reply is not received from an indoor and outdoor unit 11 to be updated, a step of performing update processing of a programme on the indoor and outdoor unit 11 to be updated, and a step of instructing the plurality of indoor and outdoor units 11 to perform the error notification in a case where the reply is not received from the indoor and outdoor unit 11 to be updated.

(8) A programme according to an eighth aspect causes an update device 2 connected to a communication line L connecting a plurality of indoor and outdoor units 11 to execute a step of instructing the plurality of indoor and outdoor units 11 not to perform an error notification even in a case where a reply is not received from an indoor and outdoor unit 11 to be updated, a step of performing update processing of a programme on the indoor and outdoor unit 11 to be updated, and a step of instructing the plurality of indoor and outdoor units 11 to perform the error notification in a case where the reply is not received from the indoor and outdoor unit 11 to be updated.

### Industrial Applicability

The present disclosure relates to an update device, an indoor and outdoor unit, an update system, an update method, and a programme.

In accordance with the present disclosure, it is possible to prevent the error notification from being mistakenly performed during the programme update.

### Reference Signs List

1: air conditioning system
10: centralized controller
11: indoor and outdoor unit
11a, 11b: outdoor unit
11c, 11d, 11e: indoor unit
110: CPU
1100: control signal transmission and reception unit
1101: error notification unit
1102: instruction reception unit
1103: error notification setting unit
2: update device
20: CPU
200: error notification invalidation instruction unit
201: update processing unit
202: error notification validation instruction unit
21: memory
22: output means
23: input means
24: communication interface
25: recording medium
9: update system
L: communication line

## Claims

1. An update device that is connected to a communication line connecting a plurality of indoor and outdoor units, the device comprising:
an error notification invalidation instruction unit that instructs the plurality of indoor and outdoor units not to perform an error notification even in a case where a reply is not received from an indoor and outdoor unit to be updated;
an update processing unit that performs update processing of a programme on the indoor and outdoor unit to be updated; and
an error notification validation instruction unit that instructs the plurality of indoor and outdoor units to perform the error notification in a case where the reply is not received from the indoor and outdoor unit to be updated.

2. The update device according to claim 1, wherein the error notification invalidation instruction unit further instructs a centralized controller connected to the communication line not to perform the error notification even in a case where the reply is not received from the indoor and outdoor unit to be updated.

3. The update device according to claim 1 or 2, wherein the error notification validation instruction unit further instructs a centralized controller connected to the communication line to perform the error notification in a case where the reply is not received from the indoor and outdoor unit to be updated.

4. An indoor and outdoor unit comprising:
a control signal transmission and reception unit that transmits and receives a control signal to and from another indoor and outdoor unit or a centralized controller via a communication line;
an error notification unit that performs an error notification in a case where a reply is not received from a predetermined indoor and outdoor unit within a predetermined time after the control signal with the predetermined indoor and outdoor unit as a destination is transmitted; and
an error notification setting unit that sets error notification invalidation for an indoor and outdoor unit to be updated in a case where a predetermined error notification invalidation instruction to which an address of the indoor and outdoor unit to be updated is assigned is received from an update device, and sets error notification validation for the indoor and outdoor unit to be updated in a case where a predetermined error notification validation instruction is received from the update device,
wherein, in a case where a reply is not received from the indoor and outdoor unit for which the error notification invalidation is set within the predetermined time after the control signal is transmitted, the error notification unit does not perform the error notification.

5. An indoor and outdoor unit comprising:
a control signal transmission and reception unit that transmits and receives a control signal to and from another indoor and outdoor unit or a centralized controller via a communication line;
an error notification unit that performs an error notification in a case where a reply is not received from a predetermined indoor and outdoor unit within a predetermined time after the control signal with the predetermined indoor and outdoor unit as a destination is transmitted; and
an error notification setting unit that sets error notification invalidation for an indoor and outdoor unit to be updated in a case where a predetermined error notification invalidation instruction to which an address of the indoor and outdoor unit to be updated is assigned is received from an update device, and sets error notification validation for the indoor and outdoor unit to be updated in a case where a predetermined error notification validation instruction is received from the update device,
wherein the control signal transmission and reception unit does not transmit and receive the control signal to and from the indoor and outdoor unit for which the error notification invalidation is set.

6. An update system comprising:
the update device according to any one of claims 1 to 3; and
the indoor and outdoor unit according to claim 4 or 5.

7. An update method using an update device connected to a communication line connecting a plurality of indoor and outdoor units, the method comprising:
a step of instructing the plurality of indoor and outdoor units not to perform an error notification even in a case where a reply is not received from an indoor and outdoor unit to be updated;
a step of performing update processing of a programme on the indoor and outdoor unit to be updated; and
a step of instructing the plurality of indoor and outdoor units to perform the error notification in a case where the reply is not received from the indoor and outdoor unit to be updated.

8. A programme causing an update device connected to a communication line connecting a plurality of indoor and outdoor units to execute:
a step of instructing the plurality of indoor and outdoor units not to perform an error notification even in a case where a reply is not received from an indoor and outdoor unit to be updated;
a step of performing update processing of a programme on the indoor and outdoor unit to be updated; and
a step of instructing the plurality of indoor and outdoor units to perform the error notification in a case where the reply is not received from the indoor and outdoor unit to be updated.
